# EUROPEAN PATENT APPLICATION

(11) **EP 4 361 201 A1**
(43) Date of publication of application: **01.05.2024**
(21) Application number: 22828253.9
(22) Date of filing: 13.06.2022
(51) Int. Cl.: C08G 77/06, B05D 3/02, B05D 7/24, C09D 183/04

(54) **METHOD FOR PRODUCING SILICONE POLYMER**

(30) Priority: 23.06.2021 JP 2021103746; 01.11.2021 JP 2021178844
(71) Applicant: Toray Fine Chemicals Co., Ltd., Tokyo 101-0041 (JP)
(72) Inventor: KATO Hidetoshi, Tokai-shi, Aichi 476-8567 (JP); OGAWA Ryuji, Tokai-shi, Aichi 476-8567 (JP); ISHIKAWA Michiya, Tokai-shi, Aichi 476-8567 (JP)
(74) Representative: Mewburn Ellis LLP
(86) International application number: PCT/JP2022/023582
(87) International publication number: WO 2022/270336

(57) **Abstract**

Provided is a production method for obtaining a silicone polymer, which is easily automated, continuous, and highly reproducible. The production method is characterized in that: a solution A containing at least one silane compound selected from a compound represented by general formula (1): RₐSi(OR¹)₄₋ₐ ····· (1) wherein R represents a hydrogen atom or a monovalent organic group, R¹ represents a monovalent organic group, and a represents an integer of 1 to 2, and a compound represented by general formula (2) : Si(OR²)₄ ····· (2) wherein R² represents a monovalent organic group and a solution B containing a catalyst are used; the solution A or the solution B contains water; and the solutions A and B are continuously supplied to a mixer and mixed together, and then supplied to and reacted in a tubular reactor having an inner diameter of 1 to 20 mm.

## Description

### Technical Field

The present invention relates to a production method for obtaining a silicone polymer, which is easily automated, continuous, and highly reproducible.

### Background Art

A silicone polymer is an organic-inorganic hybrid material in which an organic compound and an inorganic compound are combined at a molecular level, and is a material having both characteristics of an organic material such as flexibility and processability and characteristics of an inorganic material such as heat resistance, weather resistance, and chemical resistance, and therefore has been actively studied in recent years.

In particular, it has been proposed to use a silicone polymer as a resist lower layer film at the time of forming an inverted pattern to which a lithography technique, an etching technique, or the like is applied in pattern molding when manufacturing a semiconductor element or the like. The silicone polymer, especially when containing a large amount of a structure derived from tetramethoxysilane or tetraethoxysilane, has been known to be excellent in embeddability into a fine resist lower layer film pattern and etching resistance when the resist lower layer film pattern is removed by oxygen-based gas etching or the like.

On the other hand, a flow microsynthesis method has been put into practical use. The flow microsynthesis method is generally a method in which a raw material is continuously supplied with a pump or the like and reacted in a tubular reactor or a continuous stirring tank reactor. In particular, when an inner diameter of the tubular reactor is as extremely thin as several hundreds of micrometers, a diffusion distance is shortened, and an apparent reaction rate may be faster than that when the reaction is performed in a conventional batch-type reaction tank (see, for example, Non Patent Literature 1). The flow microsynthesis method is expected as a next-generation production method, for example, which can be easily automated, can realize continuous reaction, requires only small energy consumption because of a small size of an apparatus, and provides reduction in waste.

Attempts have been made to obtain a silicone polymer by the flow microsynthesis method. It is known that a solution composed of alkoxysilane and tetrahydrofuran and a solution composed of water, hydrochloric acid and tetrahydrofuran are each supplied to a micro mixer with a pump, and they are reacted in a tubular reactor having an inner diameter of 500 um to obtain a silicone polymer (see, for example, Non Patent Literature 2).

However, in order to obtain a sufficient polymerization time (residence time) in a tubular reactor having an inner diameter of 500 um, the tubular reactor is required to have a tube length of several meters to several tens of meters or more, and is likely to cause leakage and clogging because of a large pressure loss. In addition, in order to increase a production amount, it is necessary to prepare a plurality of the same apparatuses, which brings about a problem that a high equipment cost is required and that the production amount cannot be necessarily easily increased.

### Citation List

### Non Patent Literature

Non Patent Literature 1: supervised, and written and edited by Shu Kobayashi and Toshiya Onozawa, Flow Chemistry for Organic Synthesis, 266p, Tokyo Kagaku Dojin (2020)
Non Patent Literature 2: D. Kessler, et. al., Macromol. Chem. Phys. 210, p807-813, 2009

### Summary of Invention

### Technical Problem

An object of the present invention is to provide a method for obtaining a silicone polymer, which is easily automated, continuous, and highly reproducible.

### Solution to Problem

A method for producing a silicone polymer of the present invention is characterized in that: a solution A containing at least one silane compound selected from
a compound represented by general formula (1) below:

   RₐSi(OR¹)₄₋ₐ ····· (1)
wherein R represents a hydrogen atom or a monovalent organic group, R¹ represents a monovalent organic group, and a represents an integer of 1 to 2, and
a compound represented by general formula (2) below:

   Si(OR²)₄ ····· (2)
wherein R² represents a monovalent organic group
and a solution B containing a catalyst are used; the solution A or the solution B contains water; and the solutions A and B are continuously supplied to a mixer and mixed together, and then supplied to and reacted in a tubular reactor having an inner diameter of 1 to 20 mm.

### Advantageous Effects of Invention

In the method for producing a silicone polymer of the present invention, raw materials composed of the solution A containing a silane compound and the solution B containing a catalyst are continuously supplied with a pump or the like, mixed, and reacted, and thus manual operation is less than that in a conventional batch reaction, so that labor saving can be achieved. In addition, automatic operation is possible when operation of a pump or the like and temperature control of a mixer and a tubular reactor are controlled by a program using a personal computer or the like. Use of an information transmission network allows remote operation of operation of an apparatus and does not expose workers to hazardous chemicals. It is also possible to reduce works in the vicinity of high-risk apparatuses. The automatic operation eliminates variations due to manual operation, and thus can achieve production with high reproducibility.

In the method for producing a silicone polymer, a specific silane compound, water, and a catalyst are mixed with a mixer, preferably a static mixer. Since the static mixer has a larger specific surface area than a general reaction can, it is easy to control a temperature thereof. A smaller inner diameter of the static mixer further increases the specific surface area, which is preferable. The static mixer does not have a driving unit, and thus has no risk of generation of dust from a sliding unit or mixing of oil, and thus is suitable for production of materials for pharmaceutical products and electronic information materials with strict management.

In addition, since the inner diameter of the tubular reactor is 1 to 20 mm, the pressure loss is small, and the pressure is not excessively applied even if a long tubular reactor is designed or a supply amount is increased to increase the production amount. Furthermore, clogging is unlikely to occur because the inner diameter is as large as 1 mm or more. On the other hand, in a tubular reactor having an inner diameter of 20 mm or less, an apparent reaction rate is increased because a diffusion distance of a substance is shorter than that in a conventional reaction can, so that the reaction is quickly completed, which is preferable.

Further, the obtained reaction liquid may be brought into contact with an ion exchange resin packed in a column. The reaction liquid is brought into contact with the ion exchange resin, thereby making it possible to continuously remove a catalyst and ionic impurities such as a metal from the reaction liquid. The ion exchange resin can be repeatedly used by being regenerated, and is preferable in terms of resources and economy.

A silicone polymer produced by the method for producing a silicone polymer of the present invention and a composition thereof can form a coating film by a general method such as spin coating. In a case where the silicone polymer and the composition thereof are applied to a substrate, a thin film can be made on the substrate, and a thermosetting film can be created on the substrate by applying heat. The thermosetting film thus formed has properties of excellent transparency and heat resistance, and thus can be used in protective films for semiconductors and displays, resist lower layer films, and the like.

In addition, since the raw material for the produced silicone polymer does not contain a metal, the silicone polymer can be suitably used in electronic information materials such as displays and semiconductors. Furthermore, it can be applied not only to the field of electronic information materials but also to a wide range of fields such as paints and adhesives.

### Brief Description of Drawings

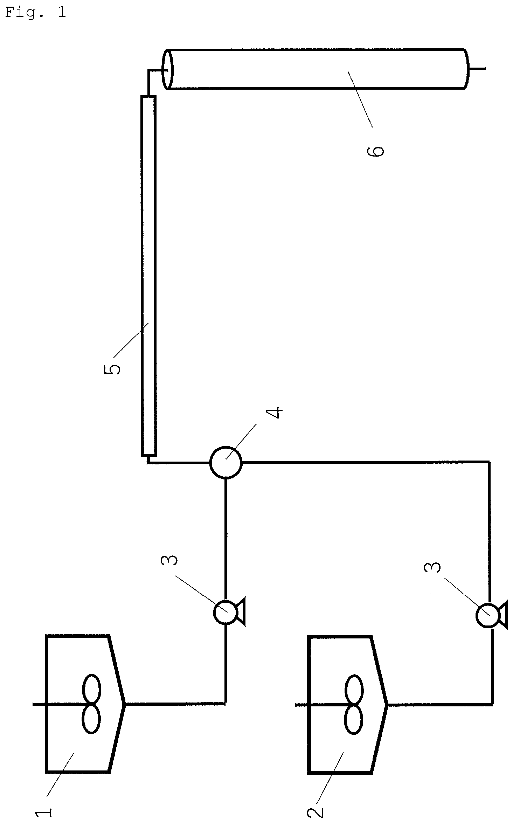

Fig. 1 is a flowchart illustrating a configuration of a production apparatus used in a method for producing a silicone polymer of the present invention.

### Description of Embodiments

The method for producing a silicone polymer of the present invention is a method for producing a silicone polymer, in which a solution A containing at least one silane compound selected from
a compound represented by general formula (1) below:

   RₐSi(OR¹)₄₋ₐ ····· (1)
wherein R represents a hydrogen atom or a monovalent organic group, R¹ represents a monovalent organic group, and a represents an integer of 1 to 2, and
a compound represented by general formula (2) below:

   Si(OR²)₄ ····· (2)
wherein R² represents a monovalent organic group
and a solution B containing a catalyst are used; the solution A or the solution B contains water; and the solutions A and B are continuously supplied to a mixer and mixed together, and then supplied to and reacted in a tubular reactor having an inner diameter of 1 to 20 mm.

As illustrated in Fig. 1, the apparatus for producing a silicone polymer includes a monomer tank 1 configured to prepare a solution A containing a silane compound, a catalyst tank 2 configured to prepare a solution B containing a catalyst, a mixer 4 configured to mix the solution A and the solution B, and a tubular reactor 5 configured to react the mixed solutions A and B. A column 6 packed with an ion exchange resin may be connected to the tubular reactor 5.

The monomer tank 1 is an apparatus for preparing a monomer solution (solution A) by weighing, charging, mixing, and taking out at least one silane compound selected from a compound represented by general formula (1) and a compound represented by general formula (2), and a solvent, and has a means for each of the operations described above. The monomer tank 1 may be of a batch type or a continuous type, or may be a combination thereof. The monomer solution (solution A) prepared in the monomer tank 1 is supplied to the mixer 4 via a pump 3 such as a dual plunger pump or a flow rate control means.

The catalyst tank 2 is an apparatus for preparing a catalyst solution (solution B) by weighing, charging, mixing, and taking out a catalyst and a solvent thereof, and has a means for each of the operations described above. The catalyst tank 2 may be of a batch type or a continuous type, or may be a combination thereof. The catalyst solution (solution B) prepared in the catalyst tank 2 is supplied to the mixer 4 via the pump 3 such as a dual plunger pump or a flow rate control means.

The mixer 4, which will be described later in detail, is preferably a stationary mixing stirrer such as a static mixer or a micro mixer. The mixer 4 mixes the supplied monomer solution (solution A) and catalyst solution (solution B) to prepare a raw material solution. The obtained raw material solution is directly supplied to the tubular reactor 5.

The tubular reactor 5, which will be described later in detail, is a reactor having an inner diameter of 1 to 20 mm. A material for the tubular reactor 5 is not particularly limited, and may be a rigid material such as a metal or a relatively flexible material such as a resin. In the tubular reactor 5, the silane compound, catalyst, and water contained in the supplied raw material solution react to result in polymerization of a silicone polymer. The tubular reactor 5 has means for appropriately adjusting polymerization conditions such as temperature, pressure, and residence time. In addition, a reaction liquid containing the obtained silicone polymer, catalyst, and the like is sent out.

The reaction liquid sent out from the tubular reactor 5 is preferably supplied to the column 6 packed with the ion exchange resin, and the catalyst in contact with the ion exchange resin is removed. The column 6 has means for appropriately adjusting conditions for contact with the ion exchange resin, such as temperature, pressure, and residence time. The reaction liquid containing the silicone polymer, from which the catalyst has been removed, is sent out from the column 6 and collected in a product container or the like.

The solution A containing a silane compound is a solution in which at least one silane compound selected from the compound represented by general formula (1) and the compound represented by general formula (2) is dissolved in a solvent. Examples of usable solvents include water; alcohols such as methanol, ethanol, n-propanol, and isopropanol; aprotic solvents such as toluene and xylene; ketone-based solvents such as methyl ethyl ketone and methyl isobutyl ketone, ether-based solvents such as diethyl ether and tetrahydrofuran, and high-boiling-point solvents such as propylene glycol monomethyl ether, propylene glycol monoethyl ether, and ethyl lactate. Two or more types of solvents may be contained.

In general formula (1) above, when R is a monovalent organic group, R and R¹ are independent from each other, and may be the same organic group or different organic groups. When a is 2, R's are independent from each other, and may be one type of monovalent organic groups or two types of monovalent organic groups. Further, two or more R¹'s are independent from each other, and may be one type of monovalent organic groups or two or more types of monovalent organic groups. Examples of the monovalent organic group as R and R¹ include an alkyl group, an aryl group, a vinyl group, an allyl group, and a glycidyl group. In general formula (1), R is preferably a monovalent organic group, particularly preferably an alkyl group, an aryl group, or a vinyl group.

Examples of the alkyl group include a methyl group, an ethyl group, a propyl group, a butyl group, and a pentyl group. The alkyl group is preferably an alkyl group having 1 to 5 carbon atoms, and these alkyl groups may be linear or branched. Further, a hydrogen atom of the alkyl group may be substituted with a functional group containing a fluorine atom or a heteroatom, or the like.

In general formula (1), examples of the aryl group include a phenyl group, a naphthyl group, a methylphenyl group, an ethylphenyl group, a chlorophenyl group, a bromophenyl group, and a fluorophenyl group.

Specific examples of the compound represented by general formula (1) can include methyltrimethoxysilane, methyltriethoxysilane, methyltri-n-propoxysilane, methyltri-iso-propoxysilane, methyltri-n-butoxysilane, methyltri-sec-butoxysilane, methyltri-tert-butoxysilane, methyltriphenoxysilane, ethyltrimethoxysilane, ethyltriethoxysilane, ethyltri-n-propoxysilane, ethyltriiso-propoxysilane, ethyltri-n-butoxysilane, ethyltri-sec-butoxysilane, ethyltri-tert-butoxysilane, ethyltriphenoxysilane, vinyltrimethoxysilane, vinyltriethoxysilane, vinyltri-n-propoxysilane, vinyltriiso-propoxysilane, vinyltri-n-butoxysilane, vinyltri-sec-butoxysilane, vinyltri-tert-butoxysilane, vinyltriphenoxysilane, n-propyltrimethoxysilane, n-propyltriethoxysilane, n-propyltri-n-propoxysilane, n-propyltri-iso-propoxysilane, n-propyltri-n-butoxysilane, n-propyltri-sec-butoxysilane, n-propyltri-tert-butoxysilane, n-propyltriphenoxysilane, i-propyltrimethoxysilane, i-propyltriethoxysilane, i-propyltri-n-propoxysilane, i-propyltri-iso-propoxysilane, i-propyltri-n-butoxysilane, i-propyltri-sec-butoxysilane, i-propyltri-tert-butoxysilane, i-propyltriphenoxysilane, n-butyltrimethoxysilane, n-butyltriethoxysilane, n-butyltri-n-propoxysilane, n-butyltri-iso-propoxysilane, n-butyltri-n-butoxysilane, n-butyltri-sec-butoxysilane, n-butyltri-tert-butoxysilane, n-butyltriphenoxysilane, sec-butyltrimethoxysilane, secbutyltriethoxysilane, sec-butyltri-n-propoxysilane, sec-butyltri-iso-propoxysilane, sec-butyltri-n-butoxysilane, sec-butyltri-sec-butoxysilane, sec-butyltri-tert-butoxysilane, sec-butyl-triphenoxysilane, t-butyltrimethoxysilane, t-butyltriethoxysilane, t-butyltri-n-propoxysilane, t-butyltri-iso-propoxysilane, t-butyltri-n-butoxysilane, t-butyltri-sec-butoxysilane, t-butyltri-tert-butoxysilane, t-butyltriphenoxysilane, phenyltrimethoxysilane, phenyltriethoxysilane, phenyltri-n-propoxysilane, phenyltri-iso-propoxysilane, phenyltri-n-butoxysilane, phenyltri-sec-butoxysilane, phenyltri-tert-butoxysilane, phenyltriphenoxysilane, γ-aminopropyltrimethoxysilane, γ-aminopropyltriethoxysilane, γ-glycidoxypropyltrimethoxysilane, γ-glycidoxypropyltriethoxysilane, γ-trifluoropropyltrimethoxysilane, γ-trifluoropropyltriethoxysilane, dimethyldimethoxysilane, dimethyldiethoxysilane, dimethyl-di-n-propoxysilane, dimethyl-di-iso-propoxysilane, dimethyl-di-n-butoxysilane, dimethyl-di-sec-butoxysilane, dimethyl-di-tert-butoxysilane, dimethyldiphenoxysilane, dimethyldimethoxysilane, diethyldiethoxysilane, diethyl-din-propoxysilane, diethyl-di-iso-propoxysilane, diethyl-din-butoxysilane, diethyl-di-sec-butoxysilane, diethyl-di-tert-butoxysilane, diethyldiphenoxysilane, di-n-propyldimethoxysilane, di-n-propyldiethoxysilane, di-n-propyl-di-n-propoxysilane, di-n-propyl-di-iso-propoxysilane, di-n-propyl-di-n-butoxysilane, di-n-propyl-di-sec-butoxysilane, di-n-propyl-di-tert-butoxysilane, din-propyl-diphenoxysilane, di-iso-propyldimethoxysilane, di-iso-propyldiethoxysilane, di-iso-propyl-di-n-propoxysilane, di-iso-propyl-di-iso-propoxysilane, di-iso-propyl-di-n-butoxysilane, di-iso-propyl-di-sec-butoxysilane, di-iso-propyl-di-tert-butoxysilane, di-iso-propyl-diphenoxysilane, di-n-butyldimethoxysilane, di-n-butyldiethoxysilane, di-n-butyl-di-n-propoxysilane, di-n-butyl-di-iso-propoxysilane, di-n-butyl-di-n-butoxysilane, di-n-butyl-di-sec-butoxysilane, di-n-butyl-di-tert-butoxysilane, di-n-butyl-diphenoxysilane, di-sec-butyldimethoxysilane, di-sec-butyldiethoxysilane, di-sec-butyl-di-n-propoxysilane, di-sec-butyl-di-iso-propoxysilane, di-sec-butyl-di-n-butoxysilane, di-sec-butyl-di-sec-butoxysilane, di-sec-butyl-di-tert-butoxysilane, di-sec-butyl-diphenoxysilane, di-tert-butyldimethoxysilane, di-tert-butyldiethoxysilane, di-tert-butyl-di-n-propoxysilane, di-tert-butyl-di-iso-propoxysilane, di-tert-butyl-di-n-propoxysilane, di-tert-butyl-di-sec-butoxysilane, di-tert-butyl-di-tert-butoxysilane, di-tert-butyl-diphenoxysilane, diphenyldimethoxysilane, diphenyl-di-ethoxysilane, diphenyl-di-n-propoxysilane, diphenyl-di-iso-propoxysilane, diphenyl-di-n-butoxysilane, diphenyl-di-sec-butoxysilane, diphenyl-di-tert-butoxysilane, diphenyldiphenoxysilane, and divinyldimethoxysilane.

Preferred compounds as the compound (1) are methyltrimethoxysilane, methyltriethoxysilane, methyltri-n-propoxysilane, methyltri-iso-propoxysilane, ethyltrimethoxysilane, ethyltriethoxysilane, phenyltrimethoxysilane, phenyltriethoxysilane, dimethyldimethoxysilane, dimethyldiethoxysilane, diethyldimethoxysilane, diethyldiethoxysilane, diphenyldimethoxysilane, diphenyldiethoxysilane, and the like, which are easily industrially available, and are preferable. These compounds may be used singly, or two or more types thereof may be used simultaneously.

In general formula (2) above, examples of the monovalent organic group represented by R² can include organic groups similar to those represented by R¹ in general formula (1) shown above. Four R²s are independent from each other, and may be one type of monovalent organic groups or two or more types of monovalent organic groups. Specifically, tetramethoxysilane, methoxytriethoxysilane, dimethoxydiethoxysilane, trimethoxyethoxysilane, tetraethoxysilane, tetra-n-propoxysilane, tetra-iso-propoxysilane, tetra-n-butoxysilane, tetra-sec-butoxysilane, tetra-tert-butoxysilane, tetraphenoxysilane, and the like are used as the compound represented by general formula (2). Among them, tetramethoxysilane and tetraethoxysilane are easily industrially available, and are preferable.

In the method for producing a silicone polymer of the present invention, a solution B containing a catalyst is used in order to promote hydrolysis condensation of the silane compound represented by general formula (1) and/or the silane compound represented by general formula (2). The solution B containing a catalyst is a solution in which a catalyst is dissolved in a solvent. Examples of usable solvents include water; alcohols such as methanol, ethanol, n-propanol, and isopropanol; aprotic solvents such as toluene and xylene; ketone-based solvents such as methyl ethyl ketone and methyl isobutyl ketone, ether-based solvents such as diethyl ether and tetrahydrofuran, and high-boiling-point solvents such as propylene glycol monomethyl ether, propylene glycol monoethyl ether, and ethyl lactate. Two or more types of solvents may be contained.

As the catalyst, either an acid catalyst or a base catalyst can be used.

As the acid catalyst, an acid catalyst except hydrochloric acid is preferable, and both an inorganic acid and an organic acid can be used. Examples of the inorganic acid include nitric acid, sulfuric acid, hydrofluoric acid, and phosphoric acid. Examples of the organic acid include acetic acid, propionic acid, butanoic acid, pentanoic acid, hexanoic acid, heptanoic acid, octanoic acid, nonanoic acid, decanoic acid, oxalic acid, maleic acid, methylmalonic acid, adipic acid, sebacic acid, gallic acid, butyric acid, mellitic acid, arachidonic acid, shikimic acid, 2-ethylhexanoic acid, oleic acid, stearic acid, linoleic acid, linolenic acid, salicylic acid, benzoic acid, p-aminobenzoic acid, p-toluenesulfonic acid, methanesulfonic acid, benzenesulfonic acid, monochloroacetic acid, dichloroacetic acid, trichloroacetic acid, trifluoroacetic acid, formic acid, malonic acid, sulfonic acid, phthalic acid, fumaric acid, citric acid, and tartaric acid. Among them, use of an organic acid is preferable because of high compatibility with an organic solvent. Preferred organic acids are oxalic acid, maleic acid, and methanesulfonic acid. Two or more types of acid catalysts may be used.

As the base catalyst, either an inorganic base or an organic base can be used. Specific examples of the inorganic base include lithium hydroxide, sodium hydroxide, potassium hydroxide, calcium hydroxide, barium hydroxide, sodium carbonate, calcium carbonate, and sodium hydrogen carbonate. As the organic base, specifically, quaternary ammonium compounds are suitably used for electronic information materials because they do not contain a metal. Among them, a quaternary ammonium compound containing a hydroxyl group is preferable.

Examples of the quaternary ammonium compound include hydroxymethyltrimethylammonium hydroxide, 1-hydroxyethyltrimethylammonium hydroxide, 2-hydroxyethyltrimethylammonium hydroxide, 1-hydroxypropyltrimethylammonium hydroxide, 2-hydroxypropyltrimethylammonium hydroxide, 3-hydroxypropyltrimethylammonium hydroxide, hydroxymethyltriethylammonium hydroxide, 1-hydroxyethyltriethylammonium hydroxide, 2-hydroxyethyltriethylammonium hydroxide, 1-hydroxypropyltriethylammonium hydroxide, 2-hydroxypropyltriethylammonium hydroxide, 3-hydroxypropyltriethylammonium hydroxide, hydroxymethyltripropylammonium hydroxide, 1-hydroxyethyltripropylammonium hydroxide, 2-hydroxyethyltripropylammonium hydroxide, 1-hydroxypropyltripropylammonium hydroxide, 2-hydroxypropyltripropylammonium hydroxide, 3-hydroxypropyltripropylammonium hydroxide, hydroxymethyltributylammonium hydroxide, 1-hydroxyethyltributylammonium hydroxide, 2-hydroxyethyltributylammonium hydroxide,1-hydroxypropyltributylammonium hydroxide, 2-hydroxypropyltributylammonium hydroxide, 3-hydroxypropyltributylammonium hydroxide, dihydroxymethyldimethylammonium hydroxide, dimethylbis(2-hydroxyethyl)ammonium hydroxide, tris(2-hydroxyethyl)methylammonium hydroxide, tetrabutylammonium fluoride, benzyltributylammonium chloride, benzyltriethylammonium chloride, benzyltrimethylammonium chloride, tetra-n-butylammonium chloride, tetraethylammonium chloride, tetramethylammonium chloride, benzyltri-n-butylammonium bromide, benzyltriethylammonium bromide, benzyl trimethylammonium bromide, n-octyltrimethylammonium bromide, hexyltrimethylammonium bromide, tetrabutylammonium bromide, tetraethylammonium bromide, tetradecyltrimethylammonium bromide, tetramethylammonium bromide, tetra-n-propylammonium bromide, tetrabutylammonium iodide, tetraethylammonium iodide, tetramethylammonium iodide, tetra-n-propylammonium iodide, trimethylphenylammonium iodide, benzyltrimethylammonium hydroxide, phenyltrimethylammonium hydroxide, tetrabutylammonium hydroxide, tetraethylammonium hydroxide, tetramethylammonium hydroxide, tetrapropylammonium hydroxide, tetrabutylammonium hydrogensulfate, tetrabutylammonium tetrafluoroborate, tetramethylammonium thiocyanate, and tetramethylammonium p-toluenesulfonate.

Among them, 2-hydroxyethyltrimethylammonium hydroxide, 2-hydroxyethyltriethylammonium hydroxide, 2-hydroxyethyltripropylammonium hydroxide, 2-hydroxyethyltributylammonium hydroxide, dimethylbis(2-hydroxyethyl)ammonium hydroxide, tris(2-hydroxyethyl)methylammonium hydroxide, benzyltributylammonium chloride, benzyltrimethylammonium chloride, tetra n-butylammonium chloride, tetramethylammonium chloride, benzyltri n-butylammonium bromide, benzyltrimethylammonium bromide, hexyltrimethylammonium bromide, tetrabutylammonium bromide, tetradecyltrimethylammonium bromide, tetramethylammonium bromide, benzyltrimethylammonium hydroxide, phenyltrimethylammonium hydroxide, tetrabutylammonium hydroxide, tetraethylammonium hydroxide, tetramethylammonium hydroxide, tetrapropylammonium hydroxide, tetrabutylammonium hydrogen sulfate, tetrabutylammonium tetrafluoroborate, tetramethylammonium thiocyanate, and tetramethylammonium p-toluenesulfonate are preferred, and tetramethylammonium hydroxide, 2-hydroxyethyltrimethylammonium hydroxide, dimethylbis(2-hydroxyethyl)ammonium hydroxide, and tris(2-hydroxyethyl)methylammonium hydroxide are further preferable. Tetramethylammonium hydroxide is inexpensive and easy to control the reaction, and 2-hydroxyethyltrimethylammonium hydroxide, dimethylbis(2-hydroxyethyl)ammonium hydroxide, and tris(2-hydroxyethyl)methylammonium hydroxide are generally obtained by an addition reaction of trimethylamine, dimethylamine, and methylamine with ethylene oxide, and a metal is not used in raw materials therefor. Thus, 2-hydroxyethyltrimethylammonium hydroxide, dimethylbis(2-hydroxyethyl)ammonium hydroxide, and tris(2-hydroxyethyl)methylammonium hydroxide having a low metal content are easily available in an industrial grade, and are preferable.

An amount of the catalyst to be used is preferably 0.002 to 2.0 mol, and more preferably 0.005 to 1.0 mol, per mol of a total amount of alkoxyl groups of the silane compound composed of the compound represented by general formula (1) above and/or the compound represented by general formula (2) above.

The solution B containing a catalyst is easy to add, has excellent workability, and may be an aqueous solution or a solution containing water.

In the method for producing a silicone polymer of the present invention, water is used for hydrolyzing and condensation-polymerizing the silane compound represented by general formula (1) and/or the silane compound represented by general formula (2). The type of water is not particularly limited, and industrial water, city water, well water, distilled water, ion-exchanged water, ultrapure water, and the like are used. One type of water may be used, or two or more types of water may be used. Among them, ion-exchanged water and ultrapure water having a high electrical resistivity are preferable, and ultrapure water having an electrical resistivity of 15 MΩ·cm or more is preferable because of a low metal content.

The water may be added to the solution A containing the silane compound represented by general formula (1) and/or the silane compound represented by general formula (2), or may be added to the solution B containing a catalyst. When the water is added to the solution B containing a catalyst, unintended hydrolysis of the silane compound represented by general formula (1) and/or the silane compound represented by general formula (2) does not occur, which is preferable.

An amount of the water to be used is preferably 1.0 to 15.0 equivalents, and more preferably 1.0 to 10.0 equivalents, per equivalent of the total amount of the alkoxyl groups of the silane compound represented by general formula (1) and/or the silane compound represented by general formula (2) below. It is further preferably 1.0 to 5.0 equivalents. An amount of the water of 1.0 equivalents or more is preferable because the hydrolysis and condensation-polymerization reaction of the silane compound rapidly proceed, and an amount of the water of 15.0 equivalents or less is preferable because the reaction of the silane compound is controlled and gelation does not occur.

In the method for producing a silicone polymer of the present invention, the solution A containing a silane compound and the solution B containing a catalyst are mixed with a mixer. As the mixer, a drive-type mixing stirrer such as a centrifugal pump, a spiral pump, or an in-line mixer having a stirring blade, a stationary mixing stirrer such as a static mixer, a nozzle, an orifice, or a T-shaped reactor, or the like is used. Among them, a stationary mixing stirrer without a driving unit or a sliding unit, that is, a static mixer, is preferable because there is no risk of generation of dust or mixing of oil. Furthermore, a micro mixer in which a flow path composed of a pipe or block of a static mixer is about 1 mm is preferable, because, when mixing involves a reaction, a diffusion distance of a substance is limited, so that the reaction quickly proceeds. An inner diameter of the pipe used in the static mixer is preferably 1 to 20 mm, and more preferably 1 to 10 mm. When the inner diameter is 1 mm or more, the pressure loss is small and the risk of clogging is small. An inner diameter of 20 mm or less is preferable because the reaction proceeds rapidly. In the static mixer or the micro mixer, elements each obtained by twisting a rectangular plate by 180 degrees in opposite directions are alternately arrayed in a tube. The number of the elements is preferably 12 or more, and further preferably 18 or more. A number of the elements of 12 or more is preferable because the raw materials are sufficiently mixed regardless of a supply rate of the raw materials. As a material for the mixer, used are: metals such as stainless steel including SUS304 and SUS316, carbon steel including SS41, SC, and SCM, Hastelloy, titanium, monel, nickel, Carpenter, and tantalum; resins such as Teflon (registered trademark), PFA, PVC, FRP, and CFRP; materials with ceramics, rubber lining, Teflon lining, and glass lining on metals; and the like. When Teflon or a Teflon-lined material is used, no metal is eluted into a mixed liquid, which is preferable. Specific examples of the mixer include static mixers of a Kenics mixer type, a Sulzer SMV type, a Sulzer SMX type, a Toray Hi-mixer type, a Komax mixer type, a Lightnin mixer type, a Ross ISG type, a Bran & Lube mixer type, a YMC Deneb type, a YMC Spica type, a YMC Hadar type, an IMM CPMM-R 300 type, and the like. A pressure at the time of mixing with the mixer is preferably 0 MPa to 5 MPa, and further preferably 0 MPa to 2 MPa. A temperature at the time of mixing with the mixer is preferably 0 to 100°C, and further preferably 5°C to 80°C. A temperature of 0°C or higher is preferable because mixing is sufficiently performed, and a temperature of 100°C or lower is preferable because the reaction is easily controlled. A time for mixing with the mixer depends on the supply rate of the raw materials and design of the mixer, but is preferably 0.1 seconds to 600 seconds, and more preferably 1 second to 300 seconds. A time of 0.1 seconds or more is preferable because mixing is sufficiently performed, and a time of 600 seconds or less is preferable because control of the reaction time is less affected. A pump is used to supply the raw materials to the mixer. Use of a personal computer (hereinafter, sometimes referred to as "PC") or the like for control of the pressure and flow rate of the pump leads to automation and labor saving, which is preferable.

In the method for producing a silicone polymer of the present invention, the reaction is performed in a tubular reactor having an inner diameter of 1 to 20 mm. The tubular reactor is a reactor of a type in which a reaction is performed while a fluid is flowed in a tube. The inner diameter is 1 to 20 mm, and further preferably 1 to 10 mm. When the inner diameter is 1 mm or more, the pressure loss is small and the risk of clogging is small. An inner diameter of 20 mm or less is preferable because the reaction proceeds rapidly. A material for the tubular reactor is not particularly limited, and used are: metals such as stainless steel including SUS304 and SUS316, carbon steel including SS41, SC, and SCM, Hastelloy, titanium, monel, nickel, Carpenter, and tantalum; resins such as Teflon, PFA, PVC, FRP, and CFRP; materials with ceramics, rubber lining, Teflon lining, and glass lining on metals; and the like. When Teflon, PFA, or a Teflon-lined material is used, no metal is eluted into a mixed liquid, which is preferable. A pressure at the time of performing a reaction in the tubular reactor is preferably 0 MPa to 5 MPa, and further preferably 0 MPa to 2 MPa. A pressure of 0 MPa or more is preferable because the reaction can be performed at a temperature equal to or higher than the boiling point of the solvent, and a pressure of 5 MPa or less is preferable because the apparatus is simple. A temperature at the time of performing a reaction in the tubular reactor is preferably 0 to 200°C, and further preferably 5°C to 150°C. A time for performing a reaction in the tubular reactor depends on a capacity of the tubular reactor and the supply rate of the raw materials, but is preferably 1 second to 900 seconds, and further preferably 10 seconds to 600 seconds. A time of 1 second or more is sufficient for polymerization, and a time of 900 seconds or less is economically preferable. The reaction liquid to be reacted in a tubular reaction tube may be a mixed liquid obtained by mixing the solution A containing a silane compound and the solution B containing a catalyst with a mixer, or may be a mixed liquid obtained by mixing the solution A containing a silane compound and the solution B containing a catalyst in a general reaction tank. The use of the mixed liquid obtained by mixing with the mixer is preferable because the solution A containing a silane compound and the solution B containing a catalyst can be stored separately, resulting in no need to consider a pot life. The use of the mixed liquid mixed in a general reaction tank is preferable because the number of the reaction tank or pump to be used may be one, so that the apparatus is simple.

In the method for producing a silicone polymer of the present invention, the reaction liquid containing a catalyst sent out from the tubular reactor may be brought into contact with an ion exchange resin. The ion exchange resin may be either a cation exchange resin or an anion exchange resin, and a reaction liquid containing an acid catalyst is preferably brought into contact with the anion exchange resin, and a reaction liquid containing a base catalyst is preferably brought into contact with the cation exchange resin. The cation exchange resin may be a strongly acidic cation exchange resin or a weakly acidic cation exchange resin. Commonly used resins, for example, commercially available hydrogen type cation exchange resins, specifically, Amberlist (manufactured by Organo Corporation), Lewatit (manufactured by LANXESS Corporation), DIAION (manufactured by Mitsubishi Chemical Corporation), Monosphere (manufactured by The Dow Chemical Company) and the like can be used. As the cation exchange resin, a strongly acidic cation exchange resin is preferable. The anion exchange resin may be either a strongly basic anion exchange resin or a weakly basic anion exchange resin, and a strongly basic anion exchange resin is preferable. Examples of the anion exchange resin include Amberlist (manufactured by Organo Corporation), Lewatit (manufactured by LANXESS Corporation), DIAION (manufactured by Mitsubishi Chemical Corporation), and Monosphere (manufactured by The Dow Chemical Company).

Examples of a method for bringing the reaction liquid reacted in the tubular reactor into contact with the ion exchange resin include a method in which the reaction liquid is circulated in a column packed with the ion exchange resin, and a method in which the ion exchange resin is added to the reaction liquid, followed by stirring. In the latter case, the ion exchange resin may be removed by filtration or the like after the treatment. Preferably, a reaction liquid containing a silicone polymer, a quaternary ammonium compound, and water is circulated in a tank packed with a cation exchange resin and brought into contact with the cation exchange resin.

An amount of the ion exchange resin (preferably, cation exchange resin) is preferably 1.0 to 10.0 equivalents, more preferably 1.1 to 8.0 equivalents, and further preferably 1.2 to 5.0 equivalents, per equivalent of the catalyst (preferably, quaternary ammonium compound) used. When the amount of the cation exchange resin is 1.0 equivalents or more, the catalyst in the reaction liquid can be removed. When the amount of the cation exchange resin is 10.0 equivalents or less, the obtained silicone polymer is stable, and the amount of the ion exchange resin used is small, which is economically preferable.

A temperature when the reaction liquid is brought into contact with the ion exchange resin is preferably 0 to 60°C, and further preferably 5 to 50°C. A temperature of 0°C or higher is preferable because the catalyst such as the quaternary ammonium compound is sufficiently removed, and a temperature of 60°C or lower is preferable because the silicone polymer is stable.

A time for bringing the reaction liquid into contact with the ion exchange resin is preferably 5 minutes to 6 hours, and more preferably 10 minutes to 3 hours. A contact time of 5 minutes or more is preferable because the catalyst such as the quaternary ammonium compound is sufficiently removed, and a contact time of 6 hours or less is preferable because the silicone polymer is stable.

In the method for producing a silicone polymer, an alcohol may be added at the time of reacting the silane compound composed of the compound represented by general formula (1) and/or the compound represented by general formula (2). Examples of the alcohol include methanol, ethanol, n-propanol, isopropanol, n-butanol, t-butanol, propylene glycol monomethyl ether, and propylene glycol monoethyl ether. Among them, methanol is preferable because it is easily distilled off. Two or more types of alcohols may be used.

An amount of the alcohol is preferably 0.5 mass times or more, more preferably 1.0 to 10 mass times, further preferably 1.2 to 8 mass times, and further more preferably 1.5 to 5 mass times with respect to a mass of the silane compound represented by general formula (1) and/or a mass of the silane compound represented by general formula (2). When the amount of the alcohol is 0.5 mass times or more with respect to the mass of the silane compound, the mass of the silane compound represented by general formula (1) and/or the silane compound represented by general formula (2) and water are easily mixed, and gelation of the silicone polymer is suppressed, so that the silicone polymer is stabilized. An amount of the alcohol of 10 mass times or less is economically preferable.

In the method for producing a silicone polymer, a solvent may be added in addition to the alcohol. As the solvent, aprotic solvents such as toluene and xylene, ketone-based solvents such as methyl ethyl ketone and methyl isobutyl ketone, ether-based solvents such as diethyl ether and tetrahydrofuran, and high-boiling-point solvents such as propylene glycol monomethyl ether, propylene glycol monomethyl ether acetate, diethylene glycol monomethyl ether, propylene glycol monoethyl ether, and ethyl lactate can be used. Two or more types of solvents may be used.

In the method for producing a silicone polymer, a weight average molecular weight of the silicone polymer to be produced is preferably 300 to 100,000, more preferably 500 to 50,000, and further preferably 1,000 to 20,000. A weight average molecular weight of 300 or more is preferable because a coating film can be formed, and a weight average molecular weight of 100,000 or less is preferable because the silicone polymer is soluble in an organic solvent.

A dispersion degree (Mw/Mn) obtained by dividing the weight average molecular weight (Mw) by a number average molecular weight (Mn) is preferably 1 to 20, and more preferably 1 to 5.

In the present specification, the weight average molecular weight (Mw), the number average molecular weight (Mn) and a Z average molecular weight (Mz) of the silicone polymer can be measured using gel permeation chromatography (GPC) and determined in terms of standard polystyrene.

In the method for producing a silicone polymer, a higher-order structure of the obtained silicone polymer may be a basket type.

The silicone polymer obtained by the method for producing a silicone polymer of the present invention may be dissolved in a solvent. As the solvent, an alcohol-based solvent and a high-boiling-point solvent are used. Examples of the alcohol-based solvent include alcohol-based solvents such as methanol, ethanol, and isopropanol, and examples of the high-boiling-point solvent include propylene glycol monomethyl ether, propylene glycol monomethyl ether acetate, propylene glycol monoethyl ether, propylene glycol monoethyl ether acetate, diethylene glycol monomethyl ether, and ethyl lactate.

Examples of a method for obtaining a coating film with the silicone polymer obtained by the method for producing a silicone polymer include a method for forming a film in which the silicone polymer is applied to a substrate and heated.

In preparation of a coating film, the silicone polymer is spin-coated on a substrate to form a thin film, and the thin film is heated to obtain a coating film. Examples of the substrate include substrates formed of glass, silicon wafers, and resins such as polyethylene, polypropylene, and polypropylene terephthalate.

Next, the thin film formed on the substrate is placed in a hot plate or an incubator and heated to remove the solvent, and the silicone polymer is subjected to hydrolysis and condensation-polymerization reaction to prepare a coating film.

In general, in the preparation of a film, the film can be prepared by heating at preferably 80°C or higher, more preferably 100°C or higher.

The coating film prepared in this way gives a very hard film having a pencil hardness of preferably 4H or more, and is excellent in scratch resistance. The pencil hardness can be measured according to JIS K5600-5-4 (1999).

The silicone polymer obtained by the method for producing a silicone polymer of the present invention is suitably used for making a semiconductor, a display, or the like because a coating film can be easily obtained as described above.

### Examples

Hereinafter, the present invention will be specifically described with reference to Examples and Comparative Examples. In the following Examples, the following apparatus was used for analysis, and a general reagent purchased from a reagent manufacturer was used as a raw material unless otherwise specified. The following method was used for the analysis.

### ·Molecular weight measurement

A HLC-8220GPC system manufactured by Tosoh Corporation was used, and TSKgel SuperHZ3000, TSKgel SuperHZ2000, and TSKgel SuperHZ1000 manufactured by Tosoh Corporation were connected in series to perform analysis. Detection was performed with RI (refractometer), and one TSKgel SuperH-RC was used as a reference column. Tetrahydrofuran manufactured by Wako Pure Chemical Industries, Ltd. was used as a developing solvent, and the flow rates of the column and the reference column were set to 0.35 mL/min. The measurement temperature was 40°C for both a plunger pump and the column. A sample was prepared with a setting of diluting about 0.025 g of a silicone polymer with 10 mL of tetrahydrofuran and injecting 25 µL of the diluted silicone polymer. For molecular weight distribution calculation, TSK standard polystyrenes (A-500, A-1000, A-2500, A-5000, F-1, F-2, F-4, F-10, F-20, F-40, and F-80) manufactured by Tosoh Corporation were used as standard substances.

### ·Solid content concentration measurement

About 1.0 g of a solution containing the silicone polymer was put in an aluminum cup, precisely weighed, and fired at 175°C for 1 hour using a hot plate to measure the mass of a solid content with respect to about 1.0 g of the solution containing the silicone polymer, and the solid content concentration (mass%) of the solution containing the silicone polymer was calculated.

### Example 1

As a flow reactor, KeyChem Integral (manufactured by YMC.CO., LTD.) composed of two dual plunger pumps, a micro mixer, a controller, and a PC for control was used. Each of the dual plunger pumps is connected to the micro mixer. Further, the micro mixer is connected to a 500 ml column by a tube (tubular reactor) having an inner diameter of 1 mm and a length of 8 m, and the 500 ml column is packed with 450 ml of a pretreated ion exchange resin (Amberlist 15JWET, cation exchange resin manufactured by Organo Corporation). A reaction liquid that has passed through the 500 ml column is collected in an eggplant flask.

In a 500 ml plastic container, 29.68 g (0.195 mol) of tetramethoxysilane, 61.98 g (0.455 mol) of methyltrimethoxysilane, and 229.16 g of methanol were weighed, and stirred with a magnetic stirrer (monomer solution; solution A). Further, 101.37 g of a 50% aqueous choline(2-hydroxyethyltrimethylammonium hydroxide) solution was weighed into a 500 ml plastic container (catalyst solution; solution B). The plastic container containing the monomer solution (solution A) and the plastic container containing the catalyst solution (solution B) were each connected to the dual plunger pump and fed to the micro mixer. The liquid feeding rate of a pump A for supplying the monomer solution was 3.00 ml/min, the liquid feeding rate of a pump B for supplying the catalyst solution was 0.75 ml/min, and the temperature of the micro mixer was 25°C. The reaction liquid composed of the monomer solution and the catalyst solution mixed in the micro mixer was reacted in a tube (tubular reactor) having an inner diameter of 1 mm and a length of 8 m. The residence time of the reaction liquid in the tube is 100 seconds. The reaction liquid sent out from the tubular reactor was brought into contact with the ion exchange resin packed in the column to remove the catalyst. On the other hand, in parallel with the collection of the reaction liquid in the eggplant flask, 733.3 g of propylene glycol monomethyl ether was added to the eggplant flask with the plunger pump. The obtained reaction liquid was concentrated under reduced pressure to obtain 326.8 g of a colorless and transparent silicone polymer solution. The obtained silicone polymer had a weight average molecular weight (Mw) of 2,420, a dispersion degree (Mw/Mn) of 1.87, and a solid content of 10.1 mass%. The yield of the silicone polymer determined from the solid content was 80.4%. In addition, except for the work of charging the raw materials, the operation up to the concentration under reduced pressure of the reaction liquid was performed by automatic operation using the PC for control.

### Example 2

Except that the tube connecting the micro mixer and the 500 ml column was changed from the tube having an inner diameter of 1 mm and a length of 8 m, in Example 1, to a tube having an inner diameter of 2.4 mm or 1.4 m (that is, the residence time of the reaction liquid in the tube was 100 seconds), the same procedure as in Example 1 was carried out to obtain 348.9 g of a silicone polymer which was a colorless and transparent liquid. The obtained silicone polymer had a weight average molecular weight (Mw) of 2,340, a dispersion degree (Mw/Mn) of 1.83, and a solid content of 10.0 mass%. The yield of the silicone polymer determined from the solid content was 85.3%. In addition, except for the work of charging the raw materials, the operation up to the concentration under reduced pressure of the reaction liquid was performed by automatic operation using the PC for control.

### Example 3

Except that the tube connecting the micro mixer and the 500 ml column was changed from the tube having an inner diameter of 1 mm and a length of 8 m, in Example 1, to a tube having an inner diameter of 2.4 mm or 2.8 m (that is, the residence time of the reaction liquid in the tube was 200 seconds), the same procedure as in Example 1 was carried out to obtain 256.7 g of a silicone polymer which was a colorless and transparent liquid. The obtained silicone polymer had a weight average molecular weight (Mw) of 2,400, a dispersion degree (Mw/Mn) of 1.78, and a solid content of 10.2 mass%. The yield of the silicone polymer determined from the solid content was 63.8%. In addition, except for the work of charging the raw materials, the operation up to the concentration under reduced pressure of the reaction liquid was performed by automatic operation using the PC for control.

### Example 4

As a flow reactor, KeyChem Integral (manufactured by YMC.CO., LTD.) composed of two dual plunger pumps, a micro mixer, a controller, and a PC for control was used. Each of the dual plunger pumps is connected to the micro mixer. Further, the micro mixer is connected to a 500 ml column by a tube (tubular reactor) having an inner diameter of 2.4 mm and a length of 1.38 m, and the 500 ml column is packed with 450 ml of a pretreated ion exchange resin (Amberlist 15JWET, cation exchange resin manufactured by Organo Corporation). A reaction liquid that has passed through the 500 ml column is collected in an eggplant flask.

In a 500 ml plastic container, 25.10 g (0.165 mol) of tetramethoxysilane, 67.39 g (0.495 mol) of methyltrimethoxysilane, and 508.7 g of methanol were weighed, and stirred with a magnetic stirrer (monomer solution; solution A). Further, 104.5 g of a 50% aqueous choline(2-hydroxyethyltrimethylammonium hydroxide) solution was weighed into a 500 ml plastic container (catalyst solution; solution B). The plastic container containing the monomer solution (solution A) and the plastic container containing the catalyst solution (solution B) were each connected to the dual plunger pump and fed to the micro mixer. The liquid feeding rate of a pump A for supplying the monomer solution was 3.314 ml/min, the liquid feeding rate of a pump B for supplying the catalyst solution was 0.436 ml/min, and the temperature of the micro mixer was 25°C. The reaction liquid composed of the monomer solution and the catalyst solution mixed in the micro mixer was reacted in a tube (tubular reactor) having an inner diameter of 2.4 mm and a length of 1.38 m. The residence time of the reaction liquid in the tube is 100 seconds. The reaction liquid sent out from the tubular reactor was brought into contact with the ion exchange resin packed in the column to remove the catalyst. On the other hand, in parallel with the collection of the reaction liquid in the eggplant flask, 739.9 g of propylene glycol monomethyl ether was added to the eggplant flask with the plunger pump. The obtained reaction liquid was concentrated under reduced pressure to obtain 404.9 g of a colorless and transparent silicone polymer solution. The obtained silicone polymer had a weight average molecular weight (Mw) of 1,910, a dispersion degree (Mw/Mn) of 1.31, and a solid content of 10.2 mass%. The yield of the silicone polymer determined from the solid content was 98.9%. In addition, except for the work of charging the raw materials, the operation up to the concentration under reduced pressure of the reaction liquid was performed by automatic operation using the PC for control.

### Comparative Example 1

Into a 500 mL four-necked flask, 70.5 g of propylene glycol monomethyl ether, 95.4 g (0.70 mol) of methyltrimethoxysilane, and 45.7 g (0.30 mol) of tetramethoxysilane were charged. Then, 84.6 g of a 48% aqueous choline(2-hydroxyethyltrimethylammonium hydroxide) solution was added dropwise. After aging at 20 to 30°C for 4 hours, the mixture was neutralized with hydrochloric acid in an amount equivalent to that of 2-hydroxyethyltrimethylammonium hydroxide. To the reaction liquid, 423.4 g of ethyl acetate and 141.2 g of ultrapure water were added, and the mixture was stirred and then separated. To the obtained oil layer, 141.4 g of ion-exchanged water was added, and the mixture was stirred, and then separated. This operation was repeated twice, and then the liquid was concentrated at about 40°C and 160 torr. Solvent substitution was performed by adding 77.1 g of propylene glycol monomethyl ether to the concentrated liquid to obtain a propylene glycol monomethyl ether solution (630 g) having a silicone polymer solid content of 10 mass%. The yield of the silicone polymer determined from the solid content was 90.0%. The obtained silicone polymer had a weight average molecular weight (Mw) of 3,560 and a dispersion degree (Mw/Mn) of 1.98.

### Comparative Example 2

Into a 500 mL four-necked flask, 97.1 g of methanol and 70.6 g of a 25% aqueous tetramethylammonium hydroxide (TMAH) solution were charged. Further, a mixed liquid of 50.8 g (0.373 mol) of methyltrimethoxysilane and 18.9 g (0.124 mol) of tetramethoxysilane was added dropwise. The temperature was raised to 60°C, and the mixed liquid was aged for 4 hours, then cooled to 10°C or lower, and transferred to a dropping funnel. Again, 27.5 g of maleic acid was weighed in the 500 ml four-necked flask, and dissolved in 42.6 g of ion-exchanged water, and the solution was neutralized by adding dropwise a polymerization liquid from the dropping funnel while stirring. Added were 257.1 g of 1-butanol and 514.2 g of ion-exchanged water, and the mixture was stirred and then separated. Thereafter, 257.1 g of ion-exchanged water was added to the oil layer, and the mixture was stirred and then separated. This operation was repeated three times to perform water washing. The obtained oil layer was transferred to an eggplant flask, diluted with 257.1 g of propylene glycol monoethyl ether, and concentrated with an evaporator to obtain 172.6 g of a colorless and transparent silicone polymer. The obtained silicone polymer had a weight average molecular weight (Mw) of 1,610, a dispersion degree (Mw/Mn) of 1.11, and a solid content of 10.1 mass%. The yield of the silicone polymer determined from the solid content was 55.6%.

### Example 5

As a flow reactor, KeyChem Integral (manufactured by YMC.CO., LTD.) composed of two dual plunger pumps, a micro mixer, a controller, and a PC for control was used. Each of the dual plunger pumps is connected to the micro mixer. Further, the micro mixer is connected to a tube (tubular reactor) having an inner diameter of 2.4 mm and a length of 5.52 m, and the reaction liquid that has passed through the tube is collected in an eggplant flask via a back pressure valve. The tube was temperature-controlled in a water bath.

In a 250 ml plastic container, 25.70 g (0.169 mol) of tetramethoxysilane, 9.86 g (0.072 mol) of methyltrimethoxysilane, and 42.67 g of propylene glycol monoethyl ether were weighed, and stirred with a magnetic stirrer (monomer solution; solution A). Furthermore, 1.61 g of oxalic acid was weighed in a 250 ml plastic container, and 96.38 g of ion-exchanged water was added to dissolve oxalic acid (catalyst solution; solution B). The plastic container containing the monomer solution (solution A) and the plastic container containing the catalyst solution (solution B) were each connected to the dual plunger pump and fed to the micro mixer. The liquid feeding rate of a pump A for supplying the monomer solution was 0.86 ml/min, the liquid feeding rate of a pump B for supplying the catalyst solution was 1.01 ml/min, and the temperature of the micro mixer was 80°C. The reaction liquid composed of the monomer solution and the catalyst solution mixed in the micro mixer was reacted in a tube (tubular reactor) having an inner diameter of 2.4 mm and a length of 5.52 m. The residence time of the reaction liquid in the tube is 800 seconds. The tube was temperature-controlled to 80°C in a water bath. On the other hand, in parallel with the collection of the reaction liquid in the eggplant flask, 323.7 g of propylene glycol monoethyl ether was added to the eggplant flask with the plunger pump. The obtained reaction liquid was concentrated under reduced pressure to obtain 180.0 g of a colorless and transparent silicone polymer solution. The obtained silicone polymer had a weight average molecular weight (Mw) of 1,540, a dispersion degree (Mw/Mn) of 1.09, and a solid content of 10.1 mass%. In addition, except for the work of charging the raw materials, the operation up to the concentration under reduced pressure of the reaction liquid was performed by automatic operation using the PC for control.

### Example 6

Except that the catalyst solution (solution B) in Example 5 was changed to a solution obtained by weighing 0.43 g of methanesulfonic acid in a 250 ml plastic container, and adding 96.38 g of ion-exchanged water thereto to dissolve methanesulfonic acid, the same procedure as in Example 5 was carried out to obtain 181.34 g of a silicone polymer which was a colorless and transparent liquid. The obtained silicone polymer had a weight average molecular weight (Mw) of 1,550, a dispersion degree (Mw/Mn) of 1.09, and a solid content of 9.6 mass%. In addition, except for the work of charging the raw materials, the operation up to the concentration under reduced pressure of the reaction liquid was performed by automatic operation using the PC for control.

### Comparative Example 3

Into a 500 mL four-necked flask, 166.4 g of propylene glycol monoethyl ether, 9.9 g (0.072 mol) of methyltrimethoxysilane, and 25.7 g (0.17 mol) of tetramethoxysilane were charged. Then, an aqueous solution obtained by dissolving 1.61 g of oxalic acid in 96.4 g of ion-exchanged water was added dropwise. The solution was aged at 60°C for 10 hours, then transferred to an eggplant flask, and concentrated at about 40°C and 40 torr to obtain 142.3 g of a silicone polymer which was a colorless and transparent liquid. The obtained silicone polymer had a weight average molecular weight (Mw) of 1,450, a dispersion degree (Mw/Mn) of 1.06, and a solid content of 13.2 mass%.

### [Table 1]

**Table 1**

| \ | Method | Operation up to concentration | Catalyst | Reaction time | Evaluation result | | |
|---|---|---|---|---|---|---|---|
| | | | | | Molecular weight | Solid content | Yield |
| | | | | | (Mw) | (mass%) | (%) |
| Example 1 | Flow synthesis method | Automatic | Choline | 100 sec | 2420 | 10.1 | 80.4 |
| Example 2 | Flow synthesis method | Automatic | Choline | 100 sec | 2340 | 10.0 | 85.3 |
| Example 3 | Flow synthesis method | Automatic | Choline | 200 sec | 2400 | 10.2 | 63.8 |
| Example 4 | Flow synthesis method | Automatic | Choline | 100 sec | 1910 | 10.2 | 98.9 |
| Comparative Example 1 | Batch method | Manual | Choline | 4 hr | 3560 | 10.0 | 90.0 |
| Comparative Example 2 | Batch method | Manual | TMAH | 4 hr | 1610 | 10.1 | 55.6 |

### [Table 2]

**Table 2**

| | Method | Operation up to concentration | Catalyst | Reaction time | Reaction temperature | Evaluation result | |
|---|---|---|---|---|---|---|---|
| | | | | | | Molecular weight | Solid content |
| | | | | | (°C) | (Mw) | (mass%) |
| Example 5 | Flow synthesis method | Automatic | Oxalic acid | 800 sec | 80 | 1540 | 10.1 |
| Example 6 | Flow synthesis method | Automatic | Methanesulfonic acid | 800 sec | 80 | 1550 | 9.6 |
| Comparative Example 3 | Batch method | Manual | Oxalic acid | 10 hr | 60 | 1450 | 13.2 |

### Reference Signs List

- 1: Monomer tank
- 2: Catalyst tank
- 3: Pump
- 4: Mixer
- 5: Tubular reactor
- 6: Column

## Claims

1. A method for producing a silicone polymer, in which a solution A containing at least one silane compound selected from
a compound represented by general formula (1) below:
RₐSi(OR¹)₄₋ₐ ····· (1)
wherein R represents a hydrogen atom or a monovalent organic group, R¹ represents a monovalent organic group, and a represents an integer of 1 to 2, and
a compound represented by general formula (2) below:
Si(OR²)₄ ····· (2)
wherein R² represents a monovalent organic group
and a solution B containing a catalyst are used; the solution A or the solution B contains water; and the solutions A and B are continuously supplied to a mixer and mixed together, and then supplied to and reacted in a tubular reactor having an inner diameter of 1 to 20 mm.

2. The method for producing a silicone polymer according to claim 1, wherein a reaction liquid reacted in the tubular reactor is continuously supplied to and brought into contact with an ion exchange resin packed in a column.

3. The method for producing a silicone polymer according to claim 1 or 2, wherein the solution B containing a catalyst contains a catalyst and water.

4. The method for producing a silicone polymer according to any one of claims 1 to 3, wherein the catalyst is an acid catalyst except hydrochloric acid or a base catalyst.

5. The method for producing a silicone polymer according to claim 4, wherein the acid catalyst is oxalic acid, maleic acid, phosphoric acid, or methanesulfonic acid.

6. The method for producing a silicone polymer according to claim 4, wherein the base catalyst is a quaternary ammonium compound.

7. The method for producing a silicone polymer according to claim 6, wherein the quaternary ammonium compound is a quaternary ammonium compound containing a hydroxyl group.

8. The method for producing a silicone polymer according to claim 7, wherein the quaternary ammonium compound containing a hydroxyl group is 2-hydroxyethyltrimethylammonium hydroxide, dimethylbis(2-hydroxyethyl)ammonium hydroxide, or tris(2-hydroxyethyl)methylammonium hydroxide.

9. The method for producing a silicone polymer according to any one of claims 1 to 8, wherein the solution A and/or the solution B contain/contains an alcohol.

10. The method for producing a silicone polymer according to claim 9, wherein the alcohol is used 1.0 to 10 mass times with respect to a mass of the at least one silane compound.

11. A method for forming a film, in which the silicone polymer according to any one of claims 1 to 10 is applied to a substrate and heated.

12. A film obtained by the method for forming a film according to claim 11.
